# EUROPEAN PATENT APPLICATION

(11) **EP 4 793 595 A1**
(43) Date of publication of application: **19.08.2026**
(21) Application number: 25158213.6
(22) Date of filing: 17.02.2025
(51) Int. Cl.: G01C 15/00

(54) **POSITIONING OF A MINING VEHICLE WITH SINGLE SCANNING OPERATION**

(71) Applicant: Sandvik Mining and Construction Oy, 33330 Tampere (FI)
(72) Inventor: NURMINEN, Petri, 33330 TAMPERE (FI); KUKKONEN, Sami, 33330 TAMPERE (FI)
(74) Representative: Sandvik

(57) **Abstract**

A method comprises: obtaining information about positions of targets detected by a scanning device by a single scanning operation, wherein the positions of the targets are relative to the scanning device; identifying a first subset of the targets based on the first subset having a spatial configuration corresponding to a predetermined spatial configuration of reference targets mounted to a surface of the mine; identifying a second subset of the targets based on the second subset having a spatial configuration corresponding a predetermined spatial configuration of targets of the mining vehicle; obtaining information about positions of the first subset in a coordinate frame of the mine; determining a position of the mining vehicle in the coordinate frame of the mine based on the positions of the first subset in the coordinate frame of the mine and the positions of the second subset of targets relative to the scanning device.

## Description

### TECHNICAL FIELD

Various example embodiments generally relate to the field of mining. Some example embodiments relate to positioning of a mining vehicle with a single scanning operation by a scanning device.

### BACKGROUND

In various fields of technology, such as for example rock drilling or mining applications in general, it may be desired to monitor the position of mining vehicles, such as drill rigs, loaders and dumpers. Scanning devices such as tachymeters and cameras may be used to scan the environment, for example a mining tunnel, in order to recognize objects in the environment. A tachymeter is a surveying instrument that may be used to measure distances and angles quickly and accurately, for example by means of a laser signal reflected from a target such as a prism. A total station may use electromagnetic waves for a similar purpose.

### SUMMARY

The claimed invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for positioning of a mining vehicle is disclosed. The apparatus may comprise: at least one processor; and at least one memory including computer program code, the at least one memory and the computer program code configured to, with the at least one processor, cause the apparatus at least to: obtain information about positions of targets detected by a scanning device by a single scanning operation, wherein the positions of the targets are relative to the scanning device; identify a first subset of the targets based on the first subset of the targets having a spatial configuration corresponding to a predetermined spatial configuration of reference targets mounted to a surface of the mine; identify a second subset of the targets based on the second subset of the targets having a spatial configuration corresponding a predetermined spatial configuration of targets of the mining vehicle; obtain information about positions of the first subset of the targets in a coordinate frame of the mine; determine a position of the mining vehicle in the coordinate frame of the mine based on the positions of the first subset of the targets in the coordinate frame of the mine and the positions of the second subset of targets relative to the scanning device.

According to a second aspect, a mining vehicle is disclosed. The mining vehicle may comprise: at least one processor; and at least one memory including computer program code, the at least one memory and the computer program code configured to, with the at least one processor, cause the mining vehicle at least to: obtain information about positions of targets detected by a scanning device by a single scanning operation, wherein the positions of the targets are relative to the scanning device; identify a first subset of the targets based on the first subset of the targets having a spatial configuration corresponding to a predetermined spatial configuration of reference targets mounted to a surface of the mine; identify a second subset of the targets based on the second subset of the targets having a spatial configuration corresponding a predetermined spatial configuration of targets of the mining vehicle; obtain information about positions of the first subset of the targets in a coordinate frame of the mine; determine a position of the mining vehicle in the coordinate frame of the mine based on the positions of the first subset of the targets in the coordinate frame of the mine and the positions of the second subset of targets relative to the scanning device.

According to a third aspect, a method for positioning of mining vehicle is disclosed. The method may comprise: obtaining information about positions of targets detected by a scanning device by a single scanning operation, wherein the positions of the targets are relative to the scanning device; identifying a first subset of the targets based on the first subset of the targets having a spatial configuration corresponding to a predetermined spatial configuration of reference targets mounted to a surface of the mine; identifying a second subset of the targets based on the second subset of the targets having a spatial configuration corresponding a predetermined spatial configuration of targets of the mining vehicle; obtaining information about positions of the first subset of the targets in a coordinate frame of the mine; determining a position of the mining vehicle in the coordinate frame of the mine based on the positions of the first subset of the targets in the coordinate frame of the mine and the positions of the second subset of targets relative to the scanning device.

According to a fourth aspect, an apparatus for positioning a mining vehicle is disclosed. The apparatus may comprise: means for obtaining information about positions of targets detected by a scanning device by a single scanning operation, wherein the positions of the targets are relative to the scanning device; means for identifying a first subset of the targets based on the first subset of the targets having a spatial configuration corresponding to a predetermined spatial configuration of reference targets mounted to a surface of the mine; means for identifying a second subset of the targets based on the second subset of the targets having a spatial configuration corresponding a predetermined spatial configuration of targets of the mining vehicle; means for obtaining information about positions of the first subset of the targets in a coordinate frame of the mine; means for determining a position of the mining vehicle in the coordinate frame of the mine based on the positions of the first subset of the targets in the coordinate frame of the mine and the positions of the second subset of targets relative to the scanning device.

According to a fifth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: obtain information about positions of targets detected by a scanning device by a single scanning operation, wherein the positions of the targets are relative to the scanning device; identify a first subset of the targets based on the first subset of the targets having a spatial configuration corresponding to a predetermined spatial configuration of reference targets mounted to a surface of the mine; identify a second subset of the targets based on the second subset of the targets having a spatial configuration corresponding a predetermined spatial configuration of targets of a mining vehicle; obtain information about positions of the first subset of the targets in a coordinate frame of the mine; determine a position of the mining vehicle in the coordinate frame of the mine based on the positions of the first subset of the targets in the coordinate frame of the mine and the positions of the second subset of targets relative to the scanning device.

Example embodiments of the above aspects are described in the claims, the description, and/or the drawings. According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mining vehicle;
FIG. 2 illustrates an example of a scanning device configured for scanning targets mounted on a tunnel and a mining vehicle;
FIG. 3 illustrates an example of scanning targets distributed in a mining tunnel, a scanning device, and a mining vehicle;
FIG. 4 illustrates an example of a flow chart for positioning a mining vehicle;
FIG. 5 illustrates an example of scanning targets detected by a scanning device;
FIG. 6 illustrates an example of an apparatus configured to practise one or more example embodiments; and
FIG. 7 illustrates an example of a method for positioning of a mining vehicle;
Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

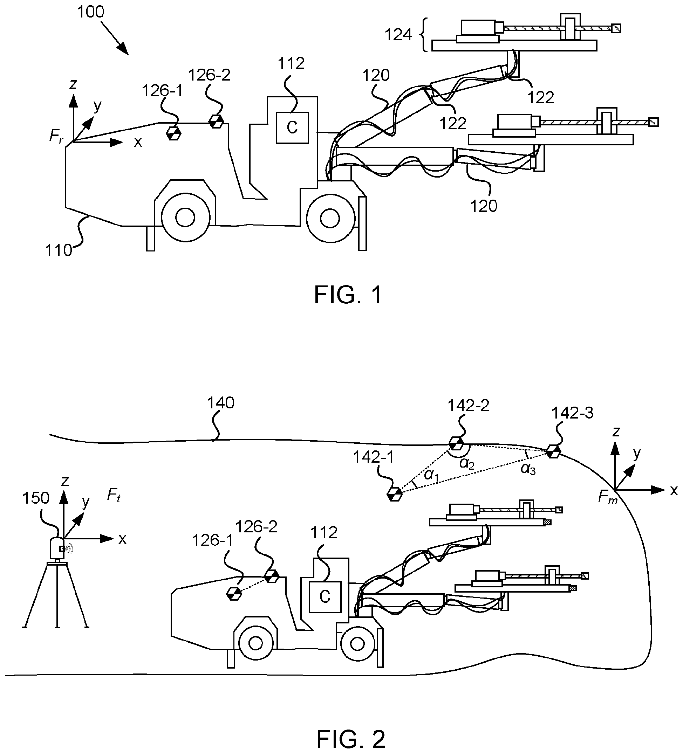

FIG. 1 illustrates an example of a mining vehicle. Even though underground drill rig 100 is provided as an example of the mining vehicle, it is understood that example embodiments of the present disclosure may be also applied to other type of mining vehicles, such as for example, mining trucks, loaders, dumpers, bolter machines, or multitaskers.

Underground drill rig 100 may be an automated mining vehicle. An automated mining vehicle may be equipped with tools configured for certain task(s), for example drilling. An automated mining vehicle operating in an automatic mode may be configured to, for example, receive a task to be performed, perceive the environment of the automated mining vehicle and autonomously perform the task while taking the environment into account. An automated mining vehicle operating in an automatic mode may be configured to operate independently but may be taken under external control by a human operator at certain operation areas or conditions, such as during states of emergencies. Example embodiments of the present disclosure may be however applied also in non-autonomous, semi-autonomous (e.g., remote-controlled) mining vehicles, or manually operated mining vehicles.

Underground drill rig 100 may comprise movable carrier 110 and boom(s) 120 connected thereto. Movable carrier 110 may comprise equipment for moving or stabilising underground drill rig 100, such as for example a motor, wheels, or stabilizer jacks (e.g., ground support). Movable carrier 110 may be configured to move autonomously or it may be configured to be controlled by a human operator, either remotely or locally at underground drill rig 100. Even though two booms 120 have been illustrated in FIG. 1, underground drill rig 100 may generally comprise one or a plurality (e.g., two, three, four,...) of booms 120. Boom(s) 120 may comprise a plurality of boom parts coupled to each other, movable carrier 110, and/or drilling unit 124 by joint(s) 122. Controllable joints 122 enable drilling unit 124 to be placed at a desired position and orientation with respect to tunnel surface 140 (see FIG. 2). Underground drill rig 100 may comprise one or more of the parts described above, or other tool(s) or equipment relevant for a drill rig.

Drilling unit 124 may comprise a feeding system configured to keep the drill bit of drilling unit 124 in contact with the drilling face, in this example tunnel surface 140, and to enable a drill rod to move along a feed beam during drilling. In general, drilling unit 124 may be movable relative to underground drill rig 100, e.g., movable relative to movable carrier 110. This provides the benefit of enabling holes to be drilled at different positions of tunnel surface 140 without moving movable carrier 110.

Drilling unit 124 may be configured to drill holes at tunnel surface 140, for example at planned hole position(s). The planned hole position(s) may be defined in a drilling plan, which may be preconfigured at underground drill rig 100 or delivered to underground drill rig 100 over a communication interface. Tunnel surface 140 may comprise the roof, floor, or wall(s) of the tunnel, or any portion(s) thereof. Alternatively, a drill rig could be configured to drill a surface outside a tunnel, for example in an opencast mine.

Underground drill rig 100 may comprise scanning targets, also simply referred to as targets, for a scanning device such as a tachymeter, a camera, a total station navigation device such as a total station theodolite. A target may be for example a prism (e.g., reflective prism), which may be configured to reflect a laser signal emitted by a tachymeter. Underground drill rig 100 may for example comprise a pair of prisms 126-1, 126-2 or in general a group of prisms (e.g., three, four, or five prisms). The prisms may be provided at predefined positions of underground drill rig 100, for example at the coordinate frame of underground drill rig 100 (*F*ᵣ). The coordinate frame of underground drill rig 100 may be stationary with respect to underground drill rig 100. A total station or total station theodolite may comprise an electronic or optical device configured to detect angles and distance from the total station navigation device to a target, for example based on reflection of a modulated infrared carrier signal from the target. Position of an unknown target relative to a known position can be determined using the total station if there is a direct line of sight between the device and the target, for example using trigonometry and triangulation.

Underground drill rig 100 may comprise computing device 112, which may be configured to determine the position of underground drill rig 100, and optionally to control various other operations of underground drill rig 100

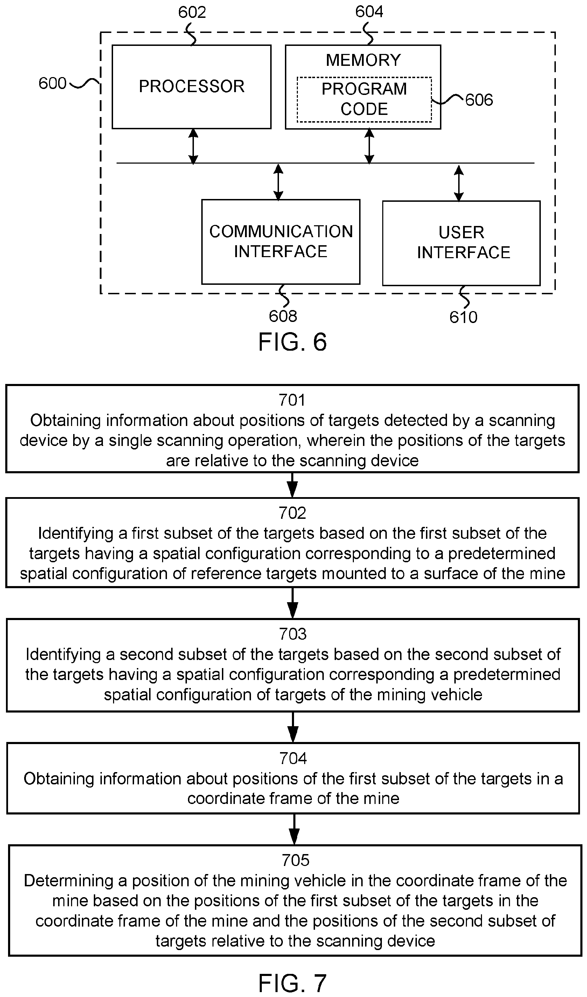

Computing device 112 may be provided as a software application residing on a memory and being executable by a processor. An example of an apparatus suitable for implementing computing device 112 is provided in FIG. 6. Computing device 112 may comprise, or be communicatively coupled to, various functions, blocks, or applications for implementing functionality of computing device 112. For example, computing device 112 may comprise or be communicatively coupled to a data management server, which may be configured to store information on data related to positioning of underground drill rig 100, such as for example positions of reference prisms 142 in a coordinate frame of the mine, as will be further described with reference to FIG. 2.

According to an example embodiment, a method may comprise: obtaining information about positions of targets detected by a scanning device by a single scanning operation, wherein the positions of the targets are relative to the scanning device; identifying a first subset of the targets based on the first subset having a spatial configuration corresponding to a predetermined spatial configuration of reference targets mounted to a surface of the mine; identifying a second subset of the targets based on the second subset having a spatial configuration corresponding a predetermined spatial configuration of targets of the mining vehicle; obtaining information about positions of the first subset in a coordinate frame of the mine; determining a position of the mining vehicle in the coordinate frame of the mine based on the positions of the first subset in the coordinate frame of the mine and the positions of the second subset of targets relative to the scanning device. Example embodiments enable faster positioning of a mining vehicle as different types of targets may be identified based on a single scanning operation.

FIG. 2 illustrates an example of a tachymeter configured for scanning targets mounted on a tunnel and an underground drill rig. Reference prisms 142-1, 142-2, 142-3, together referred to as reference prisms 142, may be provided within the mine, for example at or near tunnel surface 140 (e.g., mounted to a surface of the mine such as at the roof or wall(s) of the tunnel). Reference prisms 142 may be provided at known positions within the mine. For example, their positions in the coordinate frame of the mine *F*ₘ may be recorded upon their instalment. Reference prisms 142 are used throughout the description to generally represent reference targets for a scanning device. Reference targets may comprise targets mounted on a surface of the mine, e.g., tunnel surface 140.

Tachymeter 150, which may be also called a tacheometer and which is throughout this disclosure used to generally represent a scanning device, may be mounted on the floor of a mine, e.g., on a stand such as a tripod, or installed on tunnel surface 140. Tachymeter 150 may comprise a laser tachymeter, also referred to as a laser tracker, and it may be used to measure distances and/or angles to a target such as any of prisms 126, 142. Tachymeter 150 may be configured to emit a laser beam towards a target and to measure the time it takes for the laser to reflect from a prism 126, 142 back to tachymeter 150. A laser beam may comprise a sector (e.g., vertical sector) of emitted light. Width of the vertical sector may define the reach of the beam in the vertical direction, e.g., how low or up the beam of tachymeter 150 is directed. A laser beam may comprise a laser ray.

Tachymeter 150 may be configured to calculate the distance to the target based on the reflected light using the knowledge of the speed of light. Tachymeter 150 may be also configured to measure angle(s) towards a target, for example in both horizontal and vertical planes, for example using internal sensor(s) of tachymeter 150 that are configured to track the orientation of the laser beam. Tachymeter 150 may be configured to determine the position of the target with respect to tachymeter 150, e.g., in a coordinate frame of tachymeter 150 (*F*ₜ). Tachymeter 150 may be configured to scan its environment, for example by sweeping the laser beam horizontally and/or vertically. For example, when sweeping horizontally (e.g., from left to right), the vertical sector covered by the beam may be swept horizontally from left to right.

Reference prisms 142 may be provided at a certain spatial configuration with respect to each other, such as for example at a particular distance from each other and/or at particular relative height levels. In case of a group of more than two prisms the spatial configuration may comprise geometric shape such as a two-dimensional geometric shape (e.g., a polygon such as a triangle) or a three-dimensional geometric shape such as a polyhedron (e.g., a tetrahedron), defined by the positions of the prisms, for example as corner points of the respective geometrical shape. The same applies to prisms 126 of underground drill rig 100. A prism is used throughout the description to generally represent a target for a scanning device. A spatial configuration of targets may generally comprise information about relative positions of the targets, e.g., positions of a set of targets with respect to each other.

Tachymeter 150 may be placed or installed at the tunnel by a human operator. It is noted that tachymeter 150 may be provided at any suitable position, which might not be any predetermined or known position, as the position of tachymeter 150 may be determined based on detecting reference prisms 142.

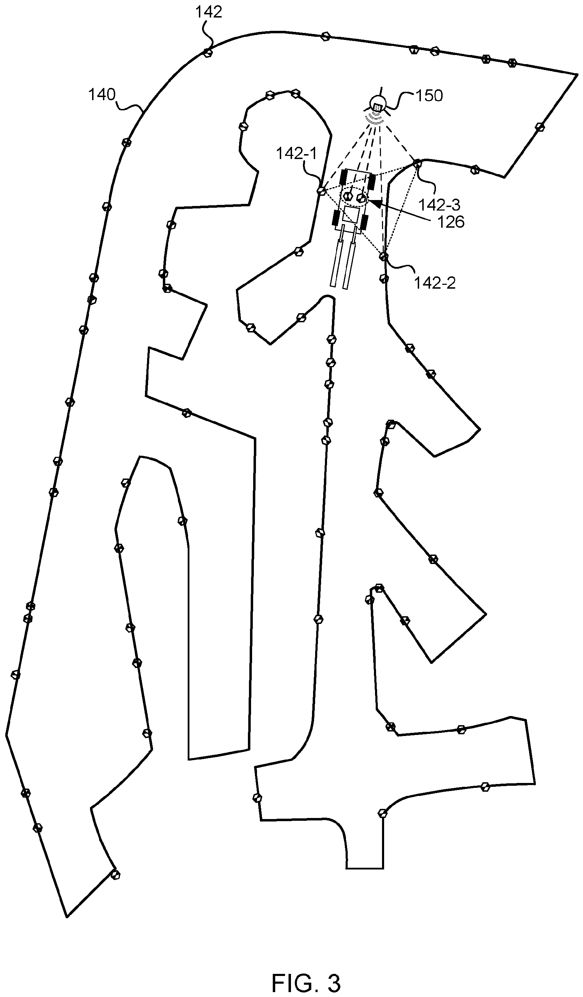

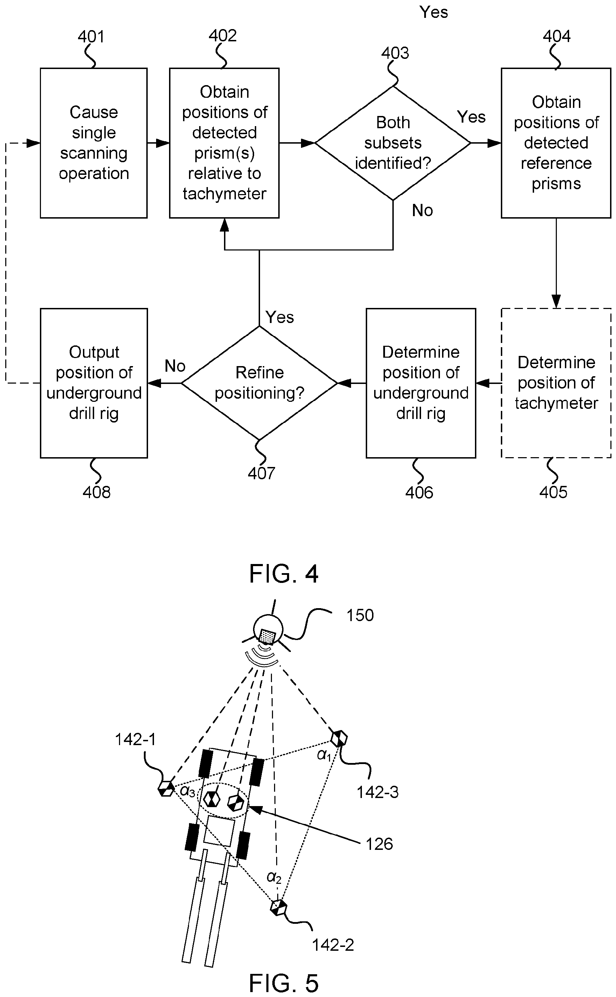

FIG. 3 illustrates an example of scanning targets distributed in a mining tunnel, a scanning device, and a mining vehicle. Reference prisms 142, representing again scanning targets in general, may be provided within the mine, for example mounted to tunnel surface 140. Reference prisms 142 may be provided at positions resembling a random distribution such that spatial geometry of a subset of reference prisms 142 is unique within the set of reference prisms provided at the mine. An enlargement of prisms detected by tachymeter is provided in FIG. 5.

FIG. 4 illustrates an example of a flow chart for positioning of a mining vehicle. Operations of the flow chart may be performed by an apparatus, such as for example computing device 112, which may be provided at a mining vehicle or in some example embodiments external to the mining vehicle to be positioned. Even though the operations have been described using tachymeter 150, prisms 126, 142, and underground drill rig 100 as examples, it is understood that similar operations may be performed for any scanning device, any type of targets, and any type of mining vehicle.

At operation 401, computing device 112 may be configured to cause tachymeter 150 to perform a single scanning operation, for example a single sweep of tachymeter 150. A single sweep of tachymeter 150 may comprise a single linear (e.g., horizontal) sweep, for example from left to right, or vice versa. In case of a stereo camera as the scanning device, the single scanning operation may comprise capturing, e.g., substantially simultaneously, a single pair of images. Using a single scanning operation for detecting both the reference prisms 142 of the mine and the prisms 126 of underground drill rig 100 provides the benefit of faster and less complex positioning, because further scanning operations may be avoided. Computing device 112 may be configured to cause tachymeter 150 to perform the scanning operation by transmitting a scanning command to tachymeter 150. Alternatively, tachymeter 150 might be configured to perform the scanning autonomously without any instructions from computing device 112.

At operation 402, computing device 112 may be configured to obtain information about positions of the prisms detected by the single scanning operation, for example by receiving this information from tachymeter 150 (e.g., via a wireless connection such as Bluetooth^{™} connection). As the positions were detected by tachymeter 150, the detected positions may be presented relative to the position of tachymeter 150, e.g., in the coordinate frame of tachymeter 150. The coordinate frame of tachymeter 150 may be stationary with respect to tachymeter 150. In general, a coordinate frame of an object may be stationary with respect to that object.

At operation 403, computing device 112 may be configured to identify subsets of the prisms detected by tachymeter 150. Computing device 112 may be configured to identify a first subset of the prisms based on determining that the first subset of the prisms has a spatial configuration (e.g. a geometric shape) corresponding to a predetermined spatial configuration of reference prisms 142 (e.g., prisms 142-1, 142-2, 142-3 in FIG. 5). For example, computing device 112 may be configured to compare parameters of the detected spatial configuration (e.g., angle(s) α₁, α₂, and/or α₃ or relative height levels of the positions) to a predetermined spatial configuration of reference prisms 142.

Similarly, computing device 112 may be configured to identify a second subset of the prisms based on determining that the second subset of the prisms has a spatial configuration corresponding to a predetermined spatial configuration of prisms of underground drill rig 100 (e.g., prisms 126 in FIG. 5). In both cases, the predetermined spatial configuration may comprise a predetermined distance between a pair of prisms, predetermined parameters of a geometric shape such as a polygon or polyhedron defined by a respective group of prisms, or at least one predetermined relative height level of the pair of targets or the group of the targets. Considering the spatial configuration when identifying prisms of the mine and underground drill rig 100 enables to distinguish these different types of prisms even though they would be detected by a single scanning operation. If computing device 112 was able to identify both subsets from the detected prisms, computing device may move to operation 404. If not, computing device 112 may be configured to continue obtaining information on positions of further prisms detected by tachymeter 150 during the single scanning operation. Note that operations 402 and 403 may be performed before completion of the single scanning operation, for example before completing the single sweep of tachymeter 150. Computing device 112 may be for example configured to gradually obtain information about the prisms detected by tachymeter 150 and to iteratively attempt identification of the different subsets of prisms.

At operation 404, computing device 112 may be configured to obtain information about positions of reference prisms 142 (cf. first subset of targets) in the coordinate frame of the mine (*F*ₘ). Computing device 112 may be configured to identify, e.g., determine identifiers of the first subset of prisms, based on their spatial configuration matching certain set of known reference prisms. Computing device 112 may be configured to retrieve the information about the positions of the first subset of prisms (e.g., 142-1, 142-2, 142-3) in the coordinate frame of the mine from a data source, such as for example a look-up table comprising indications of the positions of the identified first subset of prisms. The look-up table may be preconfigured at a memory of computing device 112 or computing device 112 may be configured to receive the look-up table from another device, e.g., the data management server.

At operation 405, computing device 112 may be configured to determine a position of tachymeter 150. Computing device 112 may be configured to determine the position of tachymeter 150 in the coordinate frame of the mine (*F*ₘ) based on the positions of reference prisms 142 (cf. a first subset of targets) in the coordinate frame of the mine and positions of reference prisms 142 relative to tachymeter 150. For example, computing device 112 may be configured to use the distances and angles from tachymeter 150 to reference prisms 142 and determine a position that corresponds to the detected angles and distances to the known positions of reference prisms 142.

Operation 405 may be however optional, because computing device 112 may be configured to determine the position of underground drill rig 100 in the coordinate frame of the mine (*F*ₘ) directly based on positions of prisms 126 and reference prisms 142 as detected by tachymeter, for example based on a transformation matrix, as will be further described below.

At operation 406, computing device 112 may be configured to determine the position of underground drill rig 100 in the coordinate frame of the mine (*F*ₘ).

As a first example, computing device 112 may be configured to determine a transformation (e.g. a transformation matrix) from a coordinate frame of tachymeter 150 (Ft), e.g., positions defined relative to tachymeter 150, to the coordinate frame of the mine (*F*ₘ). Computing device 112 may be configured to determine the transformation based on known positions of the reference prisms 142 in the coordinate frame of the mine and their positions as detected by tachymeter 150 (e.g., positions relative to tachymeter 150). Computing device 112 may be configured to determine the position of underground drill rig in the coordinate frame of the mine based on applying the transformation to the positions of prisms 126 of underground drill rig 100 (cf. second set of targets). Any suitable transform may be used. For example, when positions of the detected reference prisms have been matched with identified subset of reference prisms in the mine, an optimal rotation and translation may be calculated by computing device 112 between the subsets to obtain the transformation information needed. Hence, the transform may comprise optimal rotation and translation, for example utilizing the singular value decomposition (SVD) when describing the transform in a matrix format.

As another example, computing device 112 may be configured to first determine the position of tachymeter 150, for example as described with reference to operation 405. Computing device 112 may be configured to determine the position of underground drill rig 100 in the coordinate frame of the mine (*F*ₘ) based on determining a position that corresponds to the distances and angles to prisms 126 of underground drill rig 100.

At operation 407, computing device 112 may be configured to determine whether to refine positioning of underground drill rig 100. For example, computing device 112 may be configured to refine positioning of underground drill rig 100 until a predetermined number (e.g., two) of prisms 126 of underground drill rig 100 and/or a predetermined number (e.g., three) of reference prisms 142 of the mine have been detected. Computing device 112 may be for example configured to initially determine a position of underground drill rig 100 based a lower (e.g., minimum) number of prisms 126 and/or reference prisms 142 and to refine the positioning, in response to obtaining information about further targets (e.g., prism(s) 126 or reference prism(s) 142). This provides the benefit of making faster positioning while ultimately providing sufficient accuracy. Computing device 112 may be therefore configured to move from operation 407 back to operation 402, in response to determining to refine the positioning of underground drill rig 100. Computing device 112 may be configured to move from operation 407 to operation 408, in response to determining not to refine the positioning of underground drill rig 100 (e.g., when a predetermined number(s) of prism(s) 126 and/or reference prism(s) 142 has been identified). Operation 407 may be however optional and therefore computing device 112 might move from execution of operation 406 directly to operation 408.

At operation 408, computing device 112 may be configured to output the position of underground drill rig 100 in the coordinate frame of the mine (*F*ₘ). Computing device 112 may be for example configured to cause the position to be transmitted to another device, e.g., an external server, or an internal application of underground drill rig 100 (e.g., a navigation application). Alternatively, or additionally, computing device 112 may be configured to control operation of underground drill rig 100 based on the determined position, for example control navigation or movement of underground drill rig 100 in the mine, performance of an operation such as dumping of loading of material, or the like.

Even though illustrated in a particular order, operations of FIG. 4 may be performed in any suitable order and at least partly in parallel, where appropriate. For example, operations 404 to 406 might be performed while obtaining positions of further prism(s) as detected by tachymeter 150. Computing device 112 may be configured to move from execution of operation 408 back to operation 401 to cause a subsequent single scanning operation, for example after a predetermined time in order to perform positioning of underground drill rig 100 again. Alternatively, the procedure may be ended.

FIG. 6 illustrates an example of an apparatus configured to practise one or more example embodiments. Apparatus 600 may be or comprise a mining vehicle control apparatus, such as for example computing device 112, the mining vehicle itself, or a device external to the mining vehicle. In some example embodiments, a mining vehicle such as underground drill rig 100 may comprise apparatus 600. Although apparatus 600 is illustrated as a single device, it is appreciated that, wherever applicable, functions of apparatus 600 may be distributed to a plurality of devices.

Apparatus 600 may comprise at least one processor 602. The at least one processor 602 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), programmable logic controller (PLC), a hardware accelerator, a special-purpose computer chip, or the like.

Apparatus 600 may further comprise at least one memory 604. The at least one memory 604 may be configured to store, for example, computer program code or the like, for example operating system software and application software. The at least one memory 604 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 604 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 604 may be also embodied separate from apparatus 600, for example as a computer readable (storage) medium, examples of which include memory sticks, compact discs (CD), or the like.

When apparatus 600 is configured to implement some functionality, some component and/or components of apparatus 600, such as for example the at least one processor 602 and/or the at least one memory 604, may be configured to implement this functionality. Furthermore, when the at least one processor 602 is configured to implement some functionality, this functionality may be implemented using program code 606 comprised, for example, in the at least one memory 604.

The functionality described herein may be performed, at least in part, by one or more computer program product components such as software components. According to an example embodiment, apparatus 600 comprises a processor or processor circuitry, such as for example a microcontroller, configured by program code 606, when executed, to execute the embodiments of the operations and functionality described herein. Program code 606 is provided as an example of instructions which, when executed by the at least one processor 602, cause performance of apparatus 600.

For example, computing device 112 may be at least partially implemented as program code configured to cause apparatus 600 to perform functionality of computing device 112. Similarly, transmission or reception of data, e.g., data, instruction(s), signal(s), or command(s), over an internal or external communication interface of a mining vehicle may be controlled by software.

Alternatively, or in addition, the functionality described herein can be performed, at least in part, by one or more hardware logic components. For example, and without limitation, illustrative types of hardware logic components that can be used include field-programmable gate arrays (FPGA), application-specific integrated circuits (ASIC), application-specific standard products (ASSP), system-on-a-chip systems (SOC), complex programmable logic devices (CPLD), graphics processing units (GPU), neural processing units (NPU), tensor processing units (TPU), or the like. Computing device 112 may comprise control circuitry, for example any of the above hardware logic components or a combination of at least one processor and least one memory, for implementing functionality described herein.

Apparatus 600 may comprise a communication interface 608 configured to enable apparatus 600 to transmit and/or receive information. Communication interface 608 may comprise an internal or external communication interface, such as for example a radio interface between a mining vehicle and a scanning device or an external server, or an internal control bus within a mining vehicle. Apparatus 600 may further comprise other components and/or functions such as for example user interface 610 comprising at least one input device and/or at least one output device. The input device may take various forms such as a keyboard, a touch screen, or one or more embedded control buttons, joysticks, or other type of manual controllers. The output device may for example comprise a display, a speaker, or the like. User interface 610 may be configured to enable a human operator to monitor or control various functions of the mining vehicle.

Apparatus 600 may be configured to perform or cause performance of any aspect of the method(s) described herein. Further, a computer program or a computer program product may comprise instructions for causing, when executed by apparatus 600, apparatus 600 to perform any aspect of the method(s) described herein. Further, apparatus 600 may comprise means for performing any aspect of the method(s) described herein. In one example, the means comprises the at least one processor 602, the at least one memory 604 including program code 606 (instructions) configured to, when executed by the at least one processor 602, cause apparatus 600 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 602. Apparatus 600 may comprise means for transmitting or receiving information, for example one or more wired or wireless (e.g., radio) transmitters or receivers, which may be coupled or be configured to be coupled to one or more antennas, or transmitter(s) or receiver(s) of a wired communication interface.

According to a first aspect, an apparatus for positioning of a mining vehicle is disclosed. The apparatus may comprise: at least one processor; and at least one memory including computer program code, the at least one memory and the computer program code configured to, with the at least one processor, cause the apparatus at least to: obtain information about positions of targets detected by a scanning device by a single scanning operation, wherein the positions of the targets are relative to the scanning device; identify a first subset of the targets based on the first subset of the targets having a spatial configuration corresponding to a predetermined spatial configuration of reference targets mounted to a surface of the mine; identify a second subset of the targets based on the second subset of the targets having a spatial configuration corresponding a predetermined spatial configuration of targets of the mining vehicle; obtain information about positions of the first subset of the targets in a coordinate frame of the mine; determine a position of the mining vehicle in the coordinate frame of the mine based on the positions of the first subset of the targets in the coordinate frame of the mine and the positions of the second subset of targets relative to the scanning device.

According to an example embodiment of the first aspect, the computer program code is further configured to, with the at least one processor, cause the apparatus to: determine a transformation based on the positions of the first subset of targets in the coordinate frame of the mine and the positions of the first subset of targets relative to the scanning device; and determine the position of the mining vehicle in the coordinate frame of the mine based on applying the transformation to the positions of the second set of targets relative to the scanning device.

According to an example embodiment of the first aspect, the computer program code is further configured to, with the at least one processor, cause the apparatus to: determine a position of the scanning device in the coordinate frame of the mine based on the positions of the first subset of the targets in the coordinate frame of the mine and positions of the first subset of the targets relative to the scanning device; and determine a position of the mining vehicle in the coordinate frame of the mine based on the position of the scanning device in the coordinate frame of the mine and the positions of the second subset of targets relative to the scanning device.

According to an example embodiment of the first aspect, the scanning device comprises a tachymeter, and wherein the single scanning operation comprises a single sweep of the tachymeter.

According to an example embodiment of the first aspect, the targets comprise a plurality of reflective prisms.

According to an example embodiment of the first aspect, the scanning device comprises a stereo camera, and the single scanning operation comprises capturing a single pair of images by the stereo camera.

According to an example embodiment of the first aspect, the second subset of targets is mechanically coupled to a wall or roof of a tunnel of the mine.

According to an example embodiment of the first aspect, the predetermined spatial configuration of the targets of the mining vehicle or the predetermined spatial configuration of reference targets mounted to the surface of the mine comprises at least one of: a predetermined distance between a pair of the targets, predetermined parameters of a polygon or polyhedron defined by a group of the targets, at least one predetermined relative height level of the pair of targets or the group of the targets.

According to an example embodiment of the first aspect, the computer program code is further configured to, with the at least one processor, cause the apparatus to: cause the scanning device to perform the single scanning operation.

According to an example embodiment of the first aspect, the computer program code is further configured to, with the at least one processor, cause the apparatus to: retrieve the information about the positions of the first subset of the targets in the coordinate frame of the mine from a look-up table comprising indications of the positions of the identified second subset of the targets.

According to a second aspect, a mining vehicle is disclosed. The mining vehicle may comprise: at least one processor; and at least one memory including computer program code, the at least one memory and the computer program code configured to, with the at least one processor, cause the mining vehicle at least to: obtain information about positions of targets detected by a scanning device by a single scanning operation, wherein the positions of the targets are relative to the scanning device; identify a first subset of the targets based on the first subset of the targets having a spatial configuration corresponding to a predetermined spatial configuration of reference targets mounted to a surface of the mine; identify a second subset of the targets based on the second subset of the targets having a spatial configuration corresponding a predetermined spatial configuration of targets of the mining vehicle; obtain information about positions of the first subset of the targets in a coordinate frame of the mine; determine a position of the mining vehicle in the coordinate frame of the mine based on the positions of the first subset of the targets in the coordinate frame of the mine and the positions of the second subset of targets relative to the scanning device. The computer program code may be configured to, with the at least one processor, cause the mining vehicle to perform any example embodiment(s) of the apparatus of the first aspect.

FIG. 7 illustrates an example of a method for positioning of a mining vehicle, according to a third aspect of the present disclosure. The method may comprise a computer-implemented method performed by, for example, apparatus 600 such as computing device 112.

At operation 701, the method may comprise obtaining information about positions of targets detected by a scanning device by a single scanning operation, wherein the positions of the targets are relative to the scanning device.

At operation 702, the method may comprise identifying a first subset of the targets based on the first subset of the targets having a spatial configuration corresponding to a predetermined spatial configuration of reference targets mounted to a surface of the mine.

At operation 703, the method may comprise identifying a second subset of the targets based on the second subset of the targets having a spatial configuration corresponding a predetermined spatial configuration of targets of the mining vehicle.

At operation 704, the method may comprise obtaining information about positions of the first subset of the targets in a coordinate frame of the mine.

At operation 705, the method may comprise: determining a position of the mining vehicle in the coordinate frame of the mine based on the positions of the first subset of the targets in the coordinate frame of the mine and the positions of the second subset of targets relative to the scanning device.

According to an example embodiment of the third aspect, the method comprises: determining a transformation based on the positions of the first subset of targets in the coordinate frame of the mine and the positions of the first subset of targets relative to the scanning device; and determine the position of the mining vehicle in the coordinate frame of the mine based on applying the transformation to the positions of the second set of targets relative to the scanning device.

According to an example embodiment of the third aspect, the method comprises: determining a position of the scanning device in the coordinate frame of the mine based on the positions of the first subset of the targets in the coordinate frame of the mine and positions of the first subset of the targets relative to the scanning device; and determining a position of the mining vehicle in the coordinate frame of the mine based on the position of the scanning device in the coordinate frame of the mine and the positions of the second subset of targets relative to the scanning device.

According to an example embodiment of the third aspect, the scanning device comprises a tachymeter, and wherein the single scanning operation comprises a single sweep of the tachymeter.

According to an example embodiment of the third aspect, the targets comprise a plurality of reflective prisms.

According to an example embodiment of the third aspect, the scanning device comprises a stereo camera, and the single scanning operation comprises capturing a single pair of images by the stereo camera.

According to an example embodiment of the third aspect, the second subset of targets is mechanically coupled to a wall or roof of a tunnel of the mine.

According to an example embodiment of the third aspect, the predetermined spatial configuration of the targets of the mining vehicle or the predetermined spatial configuration of reference targets mounted to the surface of the mine comprises at least one of: a predetermined distance between a pair of the targets, predetermined parameters of a polygon or polyhedron defined by a group of the targets, at least one predetermined relative height level of the pair of targets or the group of the targets.

According to an example embodiment of the third aspect, the method comprises: causing the scanning device to perform the single scanning operation.

According to an example embodiment of the third aspect, the method comprises: retrieving the information about the positions of the first subset of the targets in the coordinate frame of the mine from a look-up table comprising indications of the positions of the identified second subset of the targets.

According to a fourth aspect, an apparatus may comprise means for obtaining information about positions of targets detected by a scanning device by a single scanning operation, wherein the positions of the targets are relative to the scanning device; means for identifying a first subset of the targets based on the first subset of the targets having a spatial configuration corresponding to a predetermined spatial configuration of reference targets mounted to a surface of the mine; means for identifying a second subset of the targets based on the second subset of the targets having a spatial configuration corresponding a predetermined spatial configuration of targets of the mining vehicle; means for obtaining information about positions of the first subset of the targets in a coordinate frame of the mine; means for determining a position of the mining vehicle in the coordinate frame of the mine based on the positions of the first subset of the targets in the coordinate frame of the mine and the positions of the second subset of targets relative to the scanning device. The apparatus may comprise means for performing any example embodiment(s) of the method of the third aspect.

According to a fifth aspect, a computer program, a computer program product, or a (non-transitory) computer-readable medium may comprise program instructions which, when executed by an apparatus, cause the apparatus at least to: obtain information about positions of targets detected by a scanning device by a single scanning operation, wherein the positions of the targets are relative to the scanning device; identify a first subset of the targets based on the first subset of the targets having a spatial configuration corresponding to a predetermined spatial configuration of reference targets mounted to a surface of the mine; identify a second subset of the targets based on the second subset of the targets having a spatial configuration corresponding a predetermined spatial configuration of targets of a mining vehicle; obtain information about positions of the first subset of the targets in a coordinate frame of the mine; determine a position of the mining vehicle in the coordinate frame of the mine based on the positions of the first subset of the targets in the coordinate frame of the mine and the positions of the second subset of targets relative to the scanning device. The computer program, the computer program product, or the (non-transitory) computer-readable medium may comprise program instructions which, when executed by an apparatus, cause the apparatus to perform any example embodiment(s) of the method of the third aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for positioning of a mining vehicle within a mine, the apparatus comprising:
at least one processor; and
at least one memory including computer program code, the at least one memory and the computer program code configured to, with the at least one processor, cause the apparatus at least to:
obtain information about positions of targets detected by a scanning device by a single scanning operation, wherein the positions of the targets are relative to the scanning device;
identify a first subset of the targets based on the first subset of the targets having a spatial configuration corresponding to a predetermined spatial configuration of reference targets mounted to a surface of the mine;
identify a second subset of the targets based on the second subset of the targets having a spatial configuration corresponding a predetermined spatial configuration of targets of the mining vehicle;
obtain information about positions of the first subset of the targets in a coordinate frame of the mine;
determine a position of the mining vehicle in the coordinate frame of the mine based on the positions of the first subset of the targets in the coordinate frame of the mine and the positions of the second subset of targets relative to the scanning device.

2. The apparatus according to claim 1, wherein the computer program code is further configured to, with the at least one processor, cause the apparatus to:
determine a transformation based on the positions of the first subset of targets in the coordinate frame of the mine and the positions of the first subset of targets relative to the scanning device; and
determine the position of the mining vehicle in the coordinate frame of the mine based on applying the transformation to the positions of the second set of targets relative to the scanning device.

3. The apparatus according to claim 1, wherein the computer program code is further configured to, with the at least one processor, cause the apparatus to:
determine a position of the scanning device in the coordinate frame of the mine based on the positions of the first subset of the targets in the coordinate frame of the mine and positions of the first subset of the targets relative to the scanning device; and
determine a position of the mining vehicle in the coordinate frame of the mine based on the position of the scanning device in the coordinate frame of the mine and the positions of the second subset of targets relative to the scanning device.

4. The apparatus according to any of claims 1 to 3, wherein the scanning device comprises a tachymeter, and wherein the single scanning operation comprises a single sweep of the tachymeter.

5. The apparatus according to any of claims 1 to 4, wherein the targets comprise a plurality of reflective prisms.

6. The apparatus according to any of claims 1 to 3, wherein the scanning device comprises a stereo camera, and wherein the single scanning operation comprises capturing a single pair of images by the stereo camera.

7. The apparatus according to any of claims 1 to 6, wherein the second subset of targets is mechanically coupled to a wall or roof of a tunnel of the mine.

8. The apparatus according to any of claims 1 to 7, wherein the predetermined spatial configuration of the targets of the mining vehicle or the predetermined spatial configuration of reference targets mounted to the surface of the mine comprises at least one of:
a predetermined distance between a pair of the targets,
predetermined parameters of a polygon or polyhedron defined by a group of the targets,
at least one predetermined relative height level of the pair of targets or the group of the targets.

9. The apparatus according to claim 8, wherein the computer program code is further configured to, with the at least one processor, cause the apparatus to:
cause the scanning device to perform the single scanning operation.

10. The apparatus according to any of claims 1 to 9, wherein the computer program code is further configured to, with the at least one processor, cause the apparatus to:
retrieve the information about the positions of the first subset of the targets in the coordinate frame of the mine from a look-up table comprising indications of the positions of the identified second subset of the targets.

11. A mining vehicle comprising the apparatus according to any of claims 1 to 10.

12. A method for positioning of a mining vehicle within a mine, the method comprising:
obtaining information about positions of targets detected by a scanning device by a single scanning operation, wherein the positions of the targets are relative to the scanning device;
identifying a first subset of the targets based on the first subset of the targets having a spatial configuration corresponding to a predetermined spatial configuration of reference targets mounted to a surface of the mine;
identifying a second subset of the targets based on the second subset of the targets having a spatial configuration corresponding a predetermined spatial configuration of targets of the mining vehicle;
obtaining information about positions of the first subset of the targets in a coordinate frame of the mine;
determining a position of the mining vehicle in the coordinate frame of the mine based on the positions of the first subset of the targets in the coordinate frame of the mine and the positions of the second subset of targets relative to the scanning device.

13. A computer program comprising program instructions which, when executed by an apparatus, cause the apparatus at least to:
obtain information about positions of targets detected by a scanning device by a single scanning operation, wherein the positions of the targets are relative to the scanning device;
identify a first subset of the targets based on the first subset of the targets having a spatial configuration corresponding to a predetermined spatial configuration of reference targets mounted to a surface of the mine;
identify a second subset of the targets based on the second subset of the targets having a spatial configuration corresponding a predetermined spatial configuration of targets of a mining vehicle;
obtain information about positions of the first subset of the targets in a coordinate frame of the mine;
determine a position of the mining vehicle in the coordinate frame of the mine based on the positions of the first subset of the targets in the coordinate frame of the mine and the positions of the second subset of targets relative to the scanning device.
